Europäisches Patentamt

European Patent Office

Office européen des brevets

(11) Publication number: 0 515 014 A1

# EUROPEAN PATENT APPLICATION

(21) Application number: 92300265.3

(22) Date of filing: 13.01.92

(51) Int. Cl.⁵: G11B 7/14, G11B 7/007, G11B 27/30, H04N 9/82

(30) Priority: 20.05.91 JP 114806/91

(43) Date of publication of application:
25.11.92 Bulletin 92/48

(84) Designated Contracting States:
DE FR GB

(71) Applicant: PIONEER ELECTRONIC CORPORATION
No. 4-1, Meguro 1-chome
Meguro-ku Tokyo 153(JP)

(72) Inventor: Sugihara, Motooki
Pioneer Tokorozawa Plant, 2610, Hanazono
4-chome
Tokorozawa City, Saitama(JP)

(74) Representative: Luckhurst, Anthony Henry
William et al
MARKS & CLERK 57-60 Lincoln's Inn Fields
London WC2A 3LS(GB)

(54) Information signal recording apparatus and apparatus for reproducing recorded information signal.

(57) A video format signal is divided into a plurality of split video signals (1) and each signal multiplexed with information data including an identification signal and error correction coding information (2, 3, 4, 5). The multiplexed signals are modulated (6) and recorded onto adjacent tracks of a recording medium (7). The identification signal is inserted in a different horizontal line in each of the split video signals. A reproducing apparatus corrects (11) the reproduced split video signals. When the drop-out in one signal is too great, the apparatus selects the other signals for providing the identification signal.

By using different horizontal lines, it is likely that the identification signal in only one split video signal will be affected.

FIG.1

The invention relates to a recording apparatus for recording an information signal to a recording medium and also to a reproducing apparatus for playing the recording medium and reproducing the original information signal.

There is a widely known method in which, for recording an information signal such as the video format signal including a video signal and horizontal and vertical sync signals or the like on a recording medium, an identification signal for identifying the video format signal is recorded by a multiplexing operation. As such an identification signal (or ID signal), a code signal indicative of the picture number, chapter number, time information, on/off condition of the noise reduction, or the like, is used. The code signal is inserted into a predetermined horizontal line of a vertical sync signal period of the video format signal. Particularly, in the case of a multi-beam system in which the video format signal is recorded on two tracks, the code signal is inserted into every track.

However, when a so-called drop-out occurs due to a scratch, dirt, or the like on the recording medium or when an error of the reproduced code signal occurs due to a cause such as a fault of the signal transmission path or the like, the original video format signal cannot be reproduced properly because an adequate countermeasure for such conditions was not taken in the conventional arrangement.

It is, therefore, an object of the invention to provide an information signal recording and reproducing apparatus which can properly reproduce an original video format signal even in the case of occurrence of the so called drop-out due to a scratch, dirt, or the like of a recording medium or in the case of occurrence of an error in a reproduced code signal due to a cause such as a defect in a signal transmission path or the like.

According to the invention, there is provided an information signal recording apparatus wherein an identification signal for identifying a video format signal including a video signal and horizontal and vertical sync signals is multiplexed to the video format signal and the multiplexed signal is recorded onto a recording medium, the apparatus comprising: dividing means for dividing the video format signal and producing a plurality of split video signals; multiplexing means for inserting the identification signal into a horizontal line in a vertical sync signal of each of the split video signals and producing a plurality of multiplexed signals; modulating means for modulating a carrier by the plurality of multiplexed signals respectively and producing modulation signals; and means for recording a signal corresponding to each of the modulation signals to each of a plurality of adjacent tracks on the recording medium, wherein the multiplexing means inserts the identification signal so that the identification signals exist on different time base positions in the horizontal lines of a plurality of adjacent tracks.

According to the present invention, there is also provided an information signal reproducing apparatus for playing a recording medium on which a plurality of split video signals obtained by dividing a video format signal including a video signal and horizontal and vertical sync signals and an identification signal for identifying the video format signal multiplexed to each of the split video signals by inserting the identification signal into a predetermined horizontal line of the vertical sync signal, are recorded onto a plurality of adjacent tracks, and for reproducing the video format signal and the identification signals, the apparatus comprising reading means for obtaining a read signal from each of the plurality of adjacent tracks; demodulating means for demodulating each of the read signals and producing demodulation signals; extracting means for extracting the identification signal from each of the demodulation signals; correcting means for executing an error correction on the basis of redundant codes for error correction of the identification signal, which are included every horizontal line of the identification signal derived from the extracting means and producing a flag indicative of the progress of the error correction; decision means for judging the content of the flag and generating a decision signal; and selecting means for selecting at least one of the identification signals after completion of the error correction in accordance with the decision signal.

In the information signal recording apparatus according to the invention, the video format signal is divided into a plurality of split video signals, and for recording the split video signals onto the adjacent tracks on the recording medium together with the identification signal indicative of the identification of the video format signal, the split video signals are recorded on the adjacent tracks so that the identification signals exist at different time base positions on the horizontal lines.

In the information signal reproducing apparatus according to the invention, for playing the recording medium on which split video signals obtained by dividing the video format signal are recorded onto a plurality of adjacent tracks and for reproducing the split video signals and the identification signal, inserted into a predetermined position of each of the split video signals, which indicates the identification of the video format signal, an error correction is executed on the basis of redundant codes for error correction of the identification signal included every horizontal line of the identification signals, and at least one of the identification signals after completion of the error correction is selected according to the content of the flag indicative of the progress of the error correction.

Fig. 1 is a block diagram showing an information signal recording apparatus according to the invention;

Fig. 2 is a diagram showing the format of signals recorded by the information signal recording apparatus shown in Fig. 1;

Fig. 3 is a block diagram showing a first embodiment of an information signal reproducing apparatus according to the invention;

Fig. 4 is a diagram showing the format of reproduction signals which are read by the information signal reproducing apparatus of the invention; and

Fig. 5 is a block diagram showing a second embodiment of an information signal reproducing apparatus according to the invention.

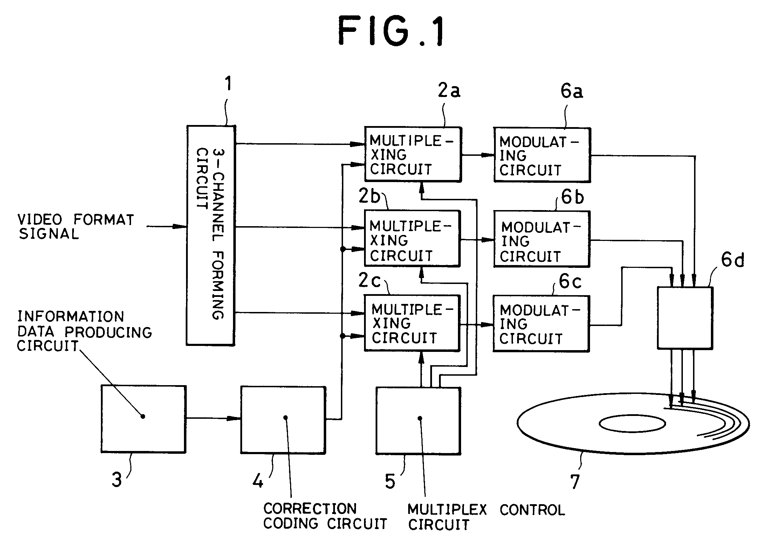

The invention will be described hereinafter with reference to Figs. 1 to 5. Fig. 1 shows a construction of an embodiment of the information recording apparatus according to the invention. In the diagram, a video format signal is supplied to a three-channel forming circuit 1 as dividing means in which the video format signal is divided into video signals of three channels A, B, and C. The three video signals are supplied to multiplexing circuits 2a, 2b, and 2c as multiplexing means, respectively. A digital code signal indicative of the picture number, chapter number, time information, on/off state of the noise reduction, etc. is produced by an information data producing circuit 3 and supplied to a correction coding circuit 4. In the correction coding circuit 4, a redundant code for error correction is added to the code signal and scramble is performed to the resultant signal. Then, the scrambled signal is supplied to the multiplexing circuits 2a, 2b, and 2c. In each of the multiplexing circuits 2a to 2c, the video signal and the code signal are multiplexed on the basis of a control signal from a multiplex control circuit 5. The multiplexed video signals are respectively supplied to modulating circuits 6a, 6b, and 6c serving as modulating means, wherein the multiplexed video signals are used for frequency modulation of a carrier signal, and supplied to a light beam irradiator 6d serving as recording means. Three light beams modulated by the FM signals are emitted from the light beam irradiator 6d and irradiated onto a disk 7 as a recording medium and the recording is executed.

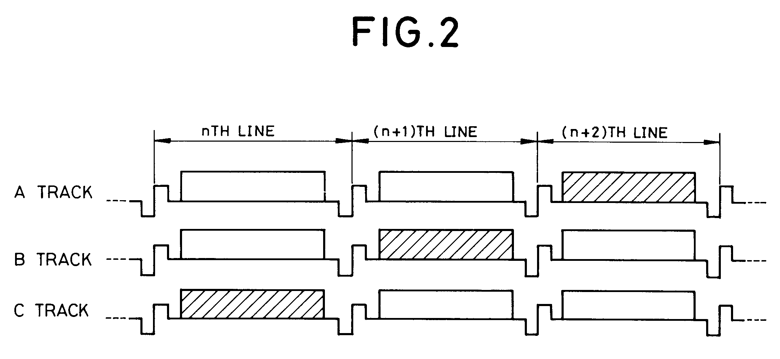

The operation of the arrangement having the construction of Fig. 1 and the format of the recording signals which are formed by the operation will now be described. The code signal supplied to the multiplexing circuit 2c is inserted into the nth line as a predetermined horizontal line in the vertical blanking period of the video signal of the channel C on the basis of a control signal from the multiplex control circuit 5 (n is set to, e.g., 16 or 279). Similarly, the code signals supplied to the multiplexing circuits 2b and 2a are inserted into the (n + 1)th and (n + 2)th lines in the vertical blanking periods of the video signals of the channels B and A on the basis of control signals from the multiplex control circuit 5. The video signals which have been multiplexed as mentioned above are used for pulse-modulation of three light beams which are irradiated to the tracks A, B, and C as three adjacent tracks on the disk 7 at a light beam irradiator 6d. The recording signals on these tracks are formatted such that the code signals are located at positions shown by hatched portions in Fig. 2, namely, at different time base positions on the horizontal line. Therefore even if the so-called a drop-out occurs due to a scratch, dirt, or the like of the recording medium, the drop-out can be compensated for by the identification signals at other horizontal line positions so that the original video format signal can be reproduced properly.

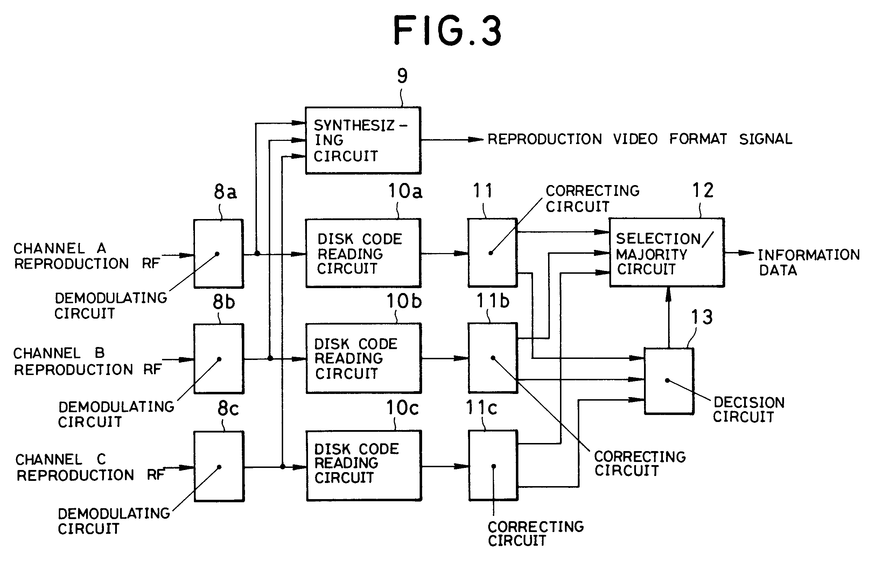

Explanation will now be made for the information reproducing apparatus for reproducing the original video format signal and the code signals by playing the disk 7 on which the video signal and the code signals have been recorded as mentioned above. In a construction of the first embodiment shown in Fig. 3, three reproduction RF signals of the channels A, B, and C are read by reading means (not shown) from the disk 7 (not shown) driven to rotate, and the reproduction RF signals are supplied to demodulating circuits 8a, 8b, and 8c as demodulating means in which frequency demodulation of the RF signal is performed, respectively. The demodulated video signals are supplied to a synthesizing circuit 9 and disk code reading circuits 10a, 10b, and 10c as extracting means for extracting the code signals, respectively. The divided video signals are synthesized and the reproduction video format signal is generated from the synthesizing circuit 9. Descrambling is performed to the code signals extracted by the disk code reading circuits 10a, 10b, and 10c and, thereafter, the code signals are supplied to correcting circuits 11a, 11b, and 11c as correcting means, respectively. In the correcting circuits 11a to 11c, predetermined error corrections are executed on the basis of the redundant codes for error correction added to the code signals and the corrected code signals are sequentially supplied to a selection/majority circuit 12 as selecting means. In the selection/majority circuit 12, the code signals from the three channels supplied are stored into a memory (not shown). A flag indicative of the progress of the error correction is formed in each correcting circuit and is supplied to a decision circuit 13 as decision means and the content of the flag is discriminated. A decision signal corresponding to the result of the discrimination is given to the selection/majority circuit 12.

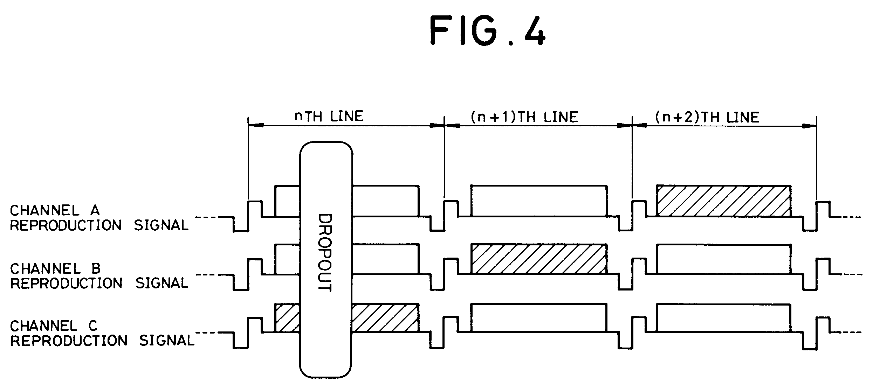

The operation of the above construction will now be described. As shown in Fig. 4, when a signal drop-out due to a scratch or the like on the disk occurs in a wide region of the nth line on the disk 7 as shown in Fig. 4, there can be a case where the signal drop-out cannot be corrected even by the error correction by the correcting circuit 11c. In such a case, a flag indicative of information showing the uncorrectable state is given from the correcting circuit 11c to the decision circuit 13. A flag indicative of no error at the (n + 1)-th line is subsequently given from the correcting circuit 11b to the decision circuit 13. Subsequently, a flag indicative of no error at the (n + 2)th line is given from the correcting circuit 11a to the decision circuit 13. On the basis of the flags given from the correcting circuits 11a to 11c, the decision circuit 13 decides that there is no error in the code signals of the channels A and B and that an error exists in the code signal of the channel C, so that a decision signal is supplied to the selection/majority circuit 12. The circuit 12 further confirms that the code signals of the channels A and B coincide with each other. The circuit 12 selects one of the code signals of the channels A and B and reads it out from the memory and generates as a correct code signal.

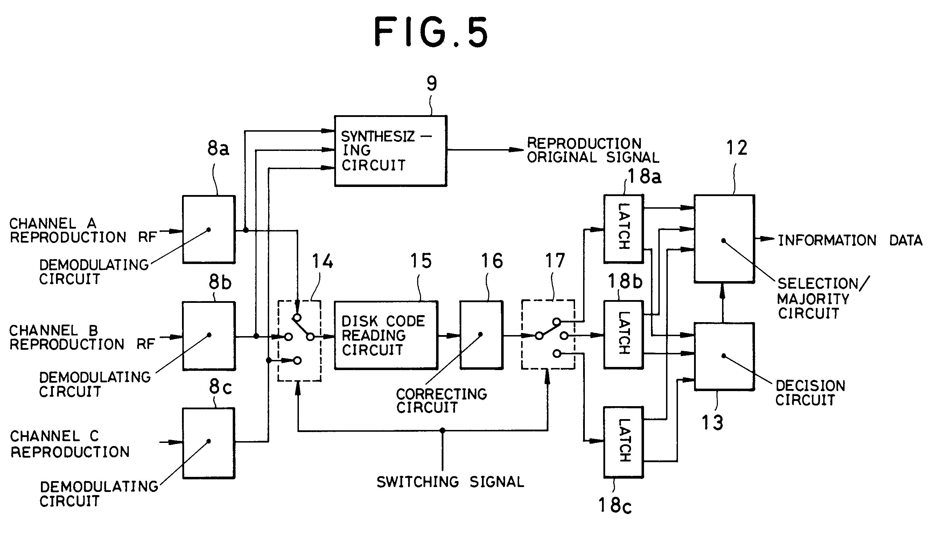

Fig. 5 shows a construction of the second embodiment of an information reproducing apparatus. In the embodiment, only one disk code reading circuit and only one correcting circuit are provided and switching circuits 14 and 17 and latch circuits 18a, 18b, and 18c are newly added. The other constructing portions are the same as those in the construction of Fig. 3 and are designated by the same reference numerals as those shown in Fig. 3. It is a feature of the construction of Fig. 5 that, in view of the fact that the code signal included in each channel does not exist in the same time base position of the horizontal line, the disk code reading circuit and the correcting circuit are switched for use in every channel, thereby enabling those circuits to be commonly used. Although not shown, a controller to switch the channels is provided and supplies switching signals to the switching circuits 14 and 17.

The operation of the embodiment in Fig. 5 will now be described. In a manner similar to the first embodiment, when the reproduction signals shown in Fig. 4 are obtained, the switching circuits 14 and 17 are switched to the channel C by switching signals from the controller at the nth line of the demodulated video signal. The video signal from the demodulating circuit 8c is supplied to a disk code reading circuit 15. The code signal of the nth line which has been descrambled in the disk code reading circuit 15 is supplied to a correcting circuit 16 and subjected to a predetermined error correction. After that, the code signal is supplied to the latch circuit 18c through the switching circuit 17 together with the flag and held in the latch circuit 18c. The switching circuits 14 and 17 are subsequently switched to the channel B by the switching signals at the (n + 1)th line and the video signal from the demodulating circuit 8b is supplied to the disk code reading circuit 15. The code signal of the (n + 1)th line which has been descrambled in the disk code reading circuit 15 is supplied to the correcting circuit 16 and error corrected. After that, the code signal is transmitted together with the flag through the switching circuit 17 and held into the latch circuit 18b. Similarly, at the (n + 2)th line, the code signal of the (n + 2)th line is supplied to the correcting circuit 16 and error corrected and, thereafter, the code signal is held into the latch circuit 18a together with the flag through the switching circuit 17. The code signals after completion of the error correction held in the latch circuits 18a, 18b, and 18c are supplied to the selection/majority circuit 12. The three flags are supplied to the decision circuit 13 and the decision signals corresponding to the contents of the flags are given to the circuit 12. In a manner similar to the first embodiment, one of the code signals of the channels A and B is selected and provided as a correct code signal. Even in the case where an error occurs in the reproduced code signal due to a cause such as a defect in the signal transmission path or the like, therefore, the identification signal can be obtained at a high probability and the original video format signal can be properly reproduced.

As described above, in the information signal recording apparatus according to the invention, the video format signal is divided into a plurality of split video signals, and when the split video signals are recorded onto the adjacent tracks of the recording medium together with the identification signal indicative of the identification of the video format signal, the signals are recorded so that the identification signals exist at the horizontal line positions on the different time bases on the adjacent tracks. Even if the so-called a drop-out occurs due to a scratch, dirt, or the like of the recording medium, therefore, the signal drop-out can be compensated for by the identification signals at the other horizontal line positions and the original video format signal can be properly reproduced.

In the information signal reproducing apparatus according to the invention, when the recording medium on which the video format signal has been divided and recorded onto a plurality of adjacent tracks is played and the split video signal and the identification signal which has been inserted into a predetermined position of the split video signal and indicates the identification of the video format signal are reproduced, the error correction is executed on the basis of the redundant code for error correction of the identification signal included every horizontal line of the identification signal and at least one of the identification signals of every track after completion of the error correction is selected in accordance with the content of the flag indicative of the progress of the error correction. Therefore, even if an error occurs in the reproduced code signal due to a cause such as a defect in the signal transmission path or the like, the correct identification signal can be obtained at a high probability and the original video format signal can be properly reproduced.

## Claims

1. An information signal recording apparatus for multiplexing an identification signal for identifying a video format signal including a video signal and horizontal and vertical sync signals to said video format signal and recording a multiplexed signal onto a recording medium, the apparatus comprising:

   dividing means (1) for dividing said video format signal and producing a plurality of split video signals;

   multiplexing means (2a, 2b, 2c, 3, 4, 5) for inserting said identification signal into a horizontal line in said vertical sync signal of said split video signals and producing a plurality of multiplex signals;

   modulating means (6a, 6b, 6c) for modulating a carrier by each of said plurality of multiplex signals and producing modulation signals; and

   means (6d) for recording the signal corresponding to each of the modulation signals onto each of said plurality of adjacent tracks on the recording medium (7), wherein the multiplexing means (2, 2b, 2c, 3, 4, 5) insert said identification signals so that said identification signals exist at different time base positions of horizontal lines (n, n + 1, n + 2) on said plurality of adjacent tracks.

2. An apparatus according to claim 1, wherein a redundant code for error correction of said identification signal is added to said identification signal every horizontal line.

3. An information signal reproducing apparatus for playing a recording medium, on which a plurality of split video signals obtained by dividing a video format signal including a video signal and horizontal and vertical sync signals and an identification signal for identifying the video format signal multiplexed to each of the split video signals by inserting said identification signal into a predetermined horizontal line in said vertical sync signal, are recorded onto a plurality of adjacent tracks, and for reproducing said video format signal and said identification signals, the apparatus comprising:

   reading means for obtaining read signals from said plurality of adjacent tracks, respectively;

   demodulating means (8a, 8b, 8c) for demodulating each of said read signals and producing demodulation signals;

   extracting means (10a, 10b, 10c) for extracting said identification signal from each of said demodulation signals, and providing a plurality of identification signals, and;

   correcting means (11a, 11b, 11c) for performing an error correction operation on the basis of a redundant code for error correction of said identification signal included in each horizontal line of said identification signal obtained from said extracting means and for producing a flag indicative of the progress of said error correction operation;

   decision means (13) for judging the content of the flag and generating a decision signal; and

   selecting means (12) for selecting at least one of said plurality of identification signals after completion of the error correction operation in accordance with said decision signal.

# FIG.1

EP 0 515 014 A1

# FIG.2

EP 0 515 014 A1

# FIG.3

CHANNEL A REPRODUCTION RF

DEMODULATING CIRCUIT

CHANNEL B REPRODUCTION RF

DEMODULATING CIRCUIT

CHANNEL C REPRODUCTION RF

DEMODULATING CIRCUIT

9

SYNTHESIZ-ING CIRCUIT

REPRODUCTION VIDEO FORMAT SIGNAL

DISK CODE READING CIRCUIT

CORRECTING CIRCUIT

SELECTION/ MAJORITY CIRCUIT

INFORMATION DATA

DECISION CIRCUIT

CORRECTING CIRCUIT

CORRECTING CIRCUIT

EP 0 515 014 A1

# FIG.4

| | nTH LINE | (n+1)TH LINE | (n+2)TH LINE |

CHANNEL A
REPRODUCTION SIGNAL

CHANNEL B
REPRODUCTION SIGNAL

CHANNEL C
REPRODUCTION SIGNAL

DROPOUT

EP 0 515 014 A1

# FIG.5

**European Patent Office**

**EUROPEAN SEARCH REPORT**

Application Number

EP    92 30 0265

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | Proceedings of the 3rd International Workshop on HDTV ,Signal processing of HDTV,II 30. August 1989 , Turin , IT. pages 519-526, Elsevier ,Amsterdam NL , H. SAEKI et Al. "Optical video disc system for HDTV". --- | 1,3 | G11B7/14 G11B7/007 G11B27/30 H04N9/82 |
| A | US-A-4 782 402 (HITOSHI KANAMARU) * claims 1,2; figure 5 * --- | 1,3 | |
| A | EP-A-0 157 577 (JVC LTD) * claim 1; figure 8 * --- | 1,3 | |
| A | EP-A-0 350 336 (SHARP K. K.) * claim 1; figures 1,2 * --- | 1,3 | |
| A | EP-A-0 207 762 (MATSUSHITA ELECTRIC IND. CO.) * page 3, line 4 - line 25; claims 1,4; figures 1-4 * | 1 | |

-----

| | | | TECHNICAL FIELDS SEARCHED (Int. Cl.5) |
|---|---|---|---|
| | | | G11B H04N |

The present search report has been drawn up for all claims

| Place of search | Date of completion of the search | Examiner |
|---|---|---|
| BERLIN | 02 SEPTEMBER 1992 | BERNAS Y. |